# NOUVEAU FASCICULE DE BREVET EUROPEEN

(11) **EP 2 701 892 B2**
(45) Date de publication et mention de la décision concernant l'opposition: **22.09.2021**
(45) Mention de la délivrance du brevet: 18.02.2015
(21) Numéro de dépôt: 12719340.7
(22) Date de dépôt: 27.04.2012
(51) Int. Cl.: B29C 64/153, B22F 3/105, B33Y 10/00, B33Y 40/00, B29C 64/40

(54) **PROCÉDÉ DE RÉALISATION D'UN OBJET PAR SOLIDIFICATION DE POUDRE À L'AIDE D'UN FAISCEAU LASER AVEC INSERTION D'UN ORGANE D'ABSORPTION DE DÉFORMATIONS**
VERFAHREN ZUR HERSTELLUNG EINES OBJEKTS DURCH PULVERVERFESTIGUNG MITTELS EINES LASERSTRAHLS MIT EINSATZ EINES ELEMENTS ZUR ABSORPTION VON DEFORMATIONEN
METHOD FOR MANUFACTURING AN OBJECT BY SOLIDIFYING POWDER USING A LASER BEAM WITH THE INSERTION OF A MEMBER FOR ABSORBING DEFORMATIONS

(30) Priorité: 29.04.2011 FR 1153683
(43) Date de publication de la demande: 05.03.2014
(73) Titulaire: Phenix Systems, 63200 Riom (FR)
(72) Inventeur: TEULET, Patrick, F-63200 Riom (FR)
(74) Mandataire: Lavoix
(86) Numéro de dépôt international: PCT/EP2012/057825
(87) Numéro de publication internationale: WO 2012/146746

(56) Documents cités:
- EP-A1- 1 358 855
- EP-A1- 2 022 622
- DE-A1- 19 507 881
- GB-A- 2 458 745
- JP-A- 2000 218 708
- INGO HELMUT UCKELMANN: "Generative Serienfertigung von individuellen Produkten aus CoCr mit Selektiven Laser-Schmelzen", Dissertation, 1 January 2006 (2006-01-01), pages Fp-105,
- C Groth et al: "Modulares Simulationssystem für das Strahlsschmelzen (SimuSint)", ,
- M.F. ZAEH et al.: "A three dimensional FE-model for the investigation of transient physical effects in Selective Laser Melting", , 1 January 2009 (2009-01-01), Retrieved from the Internet: URL:http://www.crcnetbase.com/doi/10.1201/ 9780203859476.ch64
- CHRISTOPH OVER: "Generative Fertigung von Bauteilen aus Werkzeugstahl X38CrMoV5-1 und Titan TiAl6V4 mit 'Selective Laser Melting'", Dissertation, 1 January 2003 (2003-01-01), pages 1-160,

## Description

L'invention a trait à un procédé de réalisation d'un objet par solidification de poudre à l'aide d'un faisceau laser, avec insertion d'un organe d'absorption de déformations.

Ici, le terme poudre doit être compris comme désignant une poudre ou un mélange de poudres. Cette poudre, ou ce mélange de poudres, peut être minérale, par exemple céramique, ou métallique. Par solidification, on désigne un procédé de fabrication d'un objet par solidifications successives de plusieurs couches superposées de poudre ou de mélange de poudres. Ces couches sont, au préalable, étalées et compactées sur un plateau formant une zone de travail. Chaque couche de poudre, ou de mélange de poudres, est solidifiée au niveau de zones constitutives des parois de l'objet, à l'aide d'un faisceau laser. Une telle solidification est également désignée par le terme frittage, celui-ci étant, par la suite, employé.

Lors de la réalisation d'objets à paroi épaisse et/ou de grandes dimensions on peut observer l'apparition de certaines déformations. Ces déformations se produisent lorsque le matériau constitutif de l'objet, à savoir la poudre solidifiée, a atteint une certaine température après avoir été soumis au faisceau du laser. La température atteinte dans les couches de poudre frittée constitutives des parois de l'objet dépend non seulement de l'énergie thermique apportée par le faisceau laser mais également du coefficient de conductivité thermique de la poudre solidifiée. De plus, de par ses dimensions, sa forme et/ou la nature de la poudre, l'objet possède un coefficient de dilatation linéaire donné. Dans la mesure où l'objet est réalisé sur un plateau réalisé en un matériau rigide, ce plateau possède également un coefficient de conductivité thermique et un coefficient de dilatation qui lui sont propres.

Lors du processus de fabrication, l'objet a une température qui évolue au cours de la fabrication, à savoir qu'elle augmente à chaque passage du faisceau laser. Parallèlement à l'augmentation de température de l'objet, on observe une augmentation de la température du plateau formant le support du travail.

La température de l'objet fritté est, a priori, toujours supérieure à celle du plateau puisque c'est l'objet qui reçoit l'énergie émise par le faisceau laser. Lorsque le coefficient de dilatation du plateau est supérieur ou égal à celui de l'objet, on observe un premier type de déformation du plateau. Dans ce cas, le plateau présente une face, destinée à être en contact avec une face complémentaire de l'objet, qui est convexe. Cette déformation du plateau influe sur l'objet qui présente alors une déformation complémentaire, c'est-à-dire que l'objet a au moins une face concave destinée à être en contact avec la face convexe du plateau.

En revanche, lorsque le coefficient de dilatation de l'objet est supérieur à celui du plateau, la température de l'objet étant toujours supérieure à celle du plateau, on observe un autre type de déformation. Dans ce cas, au moins une face de l'objet, destinée à être en contact avec le plateau, est concave. Le plateau présente alors une déformation complémentaire, c'est-à-dire avec au moins une face convexe destinée à être en contact avec l'objet.

Lorsque la température de l'objet est inférieure à celle atteinte par le plateau, on observe, quels que soient les coefficients de dilatation respectifs de l'objet et du plateau, une déformation d'une face de l'objet destinée à être en contact avec le plateau qui est convexe tandis que la face complémentaire du plateau est concave.

L'une des solutions connues pour remédier à ces déformations est d'utiliser, tant pour le plateau que pour la réalisation de l'objet, des matériaux dont les coefficients de conductivité thermique et/ou de dilatation sont suffisamment proches pour que les variations dimensionnelles du plateau et de l'objet soient équivalentes. Ceci est difficile à réaliser car les objets ne sont pas tous réalisés à partir de poudre ayant un coefficient de dilation similaire à celui du matériau constitutif du plateau, au moins au niveau des propriétés mécaniques. De plus, les températures de l'objet et du plateau varient au cours du procédé de fabrication. De ce fait, les déformations peuvent apparaître de manière plus ou moins marquée selon les températures.

EP-A-2 022 622 décrit un procédé de fabrication d'un objet maintenu en position dans un cadre, lors de sa fabrication, par des entretoises de forme complexe disposées sur la périphérie de l'objet. Ces entretoises ne sont pas efficaces pour empêcher l'apparition de déformations, dans la mesure où l'objet conserve une face inférieure en contact avec le plateau. Par ailleurs, ces entretoises nécessitent d'employer un grand volume de poudre ainsi qu'un plateau ayant des dimensions relativement plus grandes que celles de l'objet fini, ce qui n'est pas satisfaisant.

Le document GB 2 458 745 A divulgue un procédé selon le préambule de la revendication 1.

C'est à ces inconvénients qu'entend plus particulièrement remédier l'invention en proposant un procédé aisé à mettre en oeuvre et palliant la plupart des déformations.

A cet effet, l'invention a pour objet un procédé de fabrication d'un objet par solidification de poudre tel que défini à la revendication 1.

Ainsi, avec un organe d'absorption des déformations disposé entre l'objet et le plateau, lors de la fabrication de l'objet, on absorbe d'éventuelles déformations, tant du plateau que de l'objet et cela quelles que soient les températures, les coefficients de conductivité thermique et/ou de dilatation de l'objet et du plateau.

Des aspects avantageux mais non obligatoires de ce procédé sont définis aux revendications 2 à 5.

L'invention sera mieux comprise et d'autres avantages de celle-ci apparaîtront plus clairement à la lecture de la description qui va suivre de deux modes de réalisation d'un procédé de fabrication par solidification de poudre à l'aide d'un laser conforme à l'invention, donnée uniquement à titre d'exemple et faite en se référant aux dessins annexés dans lesquels :
- la figure 1 est une vue de côté, schématique, de la réalisation d'un objet par un procédé de l'état de la technique, l'objet étant représenté partiellement fini,
- la figure 2 est une vue schématique, de côté, d'un objet fini, après solidification, en position sur un plateau formant une zone de travail, l'ensemble ne présentant aucune déformation,
- les figures 3 et 4 illustrent l'objet fini et le plateau, vus de côté, dans le cas des deux types de déformation connus, l'objet et le plateau, sans déformation, étant illustrés en traits fantômes,
- la figure 5 est une vue d'un côté d'un objet fini et du plateau, aux figures 3 et 4, un organe d'absorption des déformations, réalisé selon le procédé conforme à un premier mode de réalisation de l'invention, dans le cas de l'absorption du type de déformation illustré à la figure 3 étant représenté, la déformation étant illustrée en traits fantômes,
- la figure 6 est une vue, à plus grande échelle, du détail VI à la figure 5, et
- les figures 7 et 8 sont des figures équivalentes aux figures 5 et 6 dans le cas du type de déformation illustré à la figure 4.

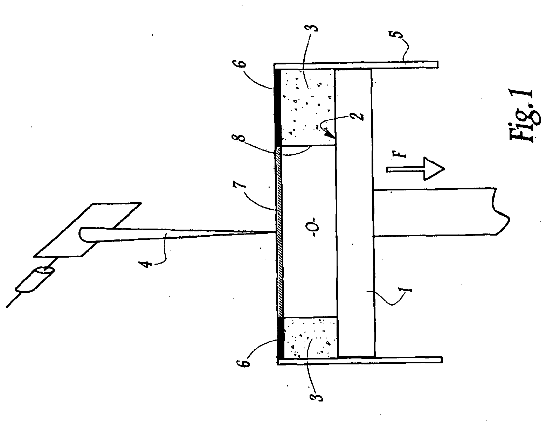

A la figure 1, un plateau 1 forme une zone de travail. Le plateau 1 présente une face plane 2 sur laquelle est étalée une poudre 3. Par poudre, on désigne ici une poudre ou un mélange de poudres, de quelque nature que soi(en)t la ou les poudre(s), à savoir minérale(s) ou métallique(s).

Cette poudre 3 est solidifiée à l'aide d'un faisceau laser 4, c'est-à-dire frittée, pour réaliser les parois d'un objet O. Le plateau 1 est mobile en translation selon une direction verticale en regardant la figure 1. Il est mobile dans un manchon 5, selon la flèche F, de manière à s'abaisser pour qu'un organe d'étalement et d'approvisionnement en poudre, non représenté et connu en soi, puisse amener, toujours au même niveau, une nouvelle couche 6 de poudre 3. Cette couche 6, représentée par un trait plein épais pour plus de lisibilité, est étalée et compactée avant la solidification à l'aide d'un laser sur la couche de poudre précédente déjà frittée. En d'autres termes, à l'aide de ce procédé on réalise, couche par couche, les parois de l'objet O. Celui-ci est schématiquement représenté sous la forme d'un rectangle, étant entendu qu'il peut être d'une forme plus complexe. Chaque couche de poudre solidifiée représentant une section d'une paroi de l'objet O.

De part et d'autre d'une zone 7 de poudre 3 frittée il demeure une zone de la couche 6 de poudre 3 non frittée et compactée. La zone 7 frittée par le faisceau laser 4 correspond à une partie d'au moins une face 80, 81, 82, 9 de l'objet O illustré aux figures 1 à 5 et 7.

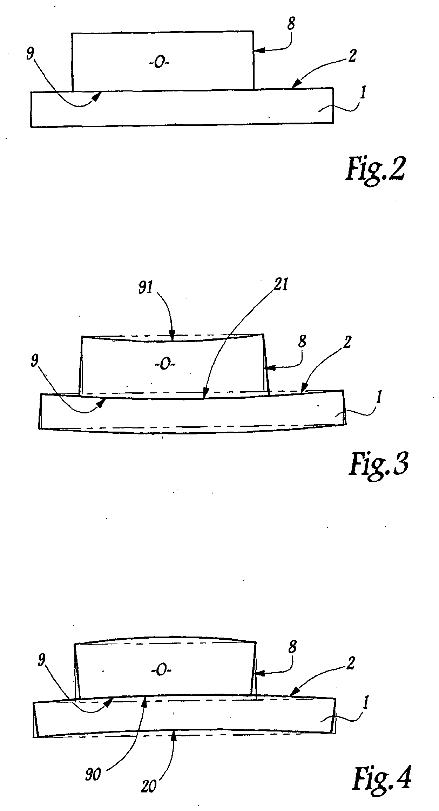

Un tel objet O, fini et sans déformation, est illustré en position sur le plateau 1 à la figure 2. Dans ce cas, les faces en contact du plateau 1 et de l'objet O, à savoir en regardant la figure 2, la face supérieure 2 du plateau 1 et la face inférieure 9 d'une paroi de fond de l'objet O, sont planes, sans déformation. En d'autres termes, les faces 2, 9 respectivement du plateau 1 et de l'objet O sont en contact sur la totalité de leurs aires respectives. L'objet O présente ainsi une qualité optimale.

Lorsque, comme représenté à la figure 3, la température T0 de l'objet O fritté est supérieure à la température T1 du plateau 1, lors d'un même procédé de frittage mais que le coefficient de dilatation D0 de l'objet O est supérieur au coefficient de dilatation D1 du plateau 1, soit T0 > T1 et D0 > D1, l'objet O se dilate en premier et, de par ses dimensions et son volume, induit un type de déformation qui affecte également le plateau 1. Il est à noter que, généralement, la température T0 de l'objet O est supérieure à la température T1 du plateau 1 car l'énergie émise par le laser impacte en premier et essentiellement l'objet O.

Dans ce cas, les faces 9, 2 de l'objet O et du plateau 1 en contact ne sont pas planes mais sont concave pour la face 2 et convexe pour la face 9. Les concavités 21, 91 des faces 2,9 sont alors orientées vers le haut, en référence à la figure 3.

Lorsque, comme illustré à la figure 4, la température T0 atteinte par l'objet O, une fois celui-ci fritté, est supérieure à la température T1 atteinte par le plateau 1, cela au cours d'un même procédé de frittage, et lorsque le coefficient de dilatation D0 de l'objet O est inférieur ou égal au coefficient de dilatation D1 du plateau 1, soit lorsque T0 >T1 et D0 ≤ D1, on observe un second type de déformation du plateau 1 induisant une déformation similaire de l'objet O.

Dans ce cas, les faces 2, 9 du plateau 1 et de l'objet O en contact ne sont plus planes mais la face 2 est convexe et la face 9 est concave. Une telle déformation des faces 2, 9 induit une déformation similaire des autres faces du plateau 1 et de l'objet O. En d'autres termes, on cintre l'ensemble, plateau 1 et objet O, de sorte que les concavités 20, 90 des faces 2, 9 soient orientées dans le même sens, à savoir vers le bas, en regardant la figure 4.

En d'autres termes, dans cette configuration on cintre l'ensemble plateau 1 et objet O dans le sens opposé à celui représenté à la figure 3.

Il est à noter que lorsque les coefficients de dilatation D0 et D1 de l'objet O et du plateau 1 sont similaires, soit D0 ≈ D1 et que le plateau 1 est à une température T1 inférieure à celle T0 de l'objet O, soit T1 < T0, alors on observe un type de déformation similaire à celle illustrée à la figure 3. Les concavités 21, 91 des faces 2, 9 sont orientées vers le haut en regardant la figure 3.

Pour éviter, ou du moins limiter, l'apparition de ces déformations, concaves ou convexes, au cours du procédé de fabrication de l'objet, on réalise, au cours de ce procédé de fabrication, un organe d'absorption des déformations 12 que l'on intercale entre les faces 9, 2 de l'objet O et du plateau 1. Cet organe d'absorption 12 comprend un support propre à absorber les déformations dues aux effets de l'écart entre les températures T0, T1 et/ou les coefficients de dilatation D0, D1, quel que soit le type de déformation.

Ce support 12, déformable, est avantageusement réalisé lors du procédé de frittage de la poudre 3 c'est-à-dire lors du procédé de fabrication de l'objet par solidification de la poudre à l'aide d'un laser. En l'espèce, il est réalisé avant d'effectuer une première solidification, par le faisceau laser 4, de la première couche 6 de poudre 3 constitutive d'une paroi de fond de l'objet O.

Pour cela, on forme par frittage dans une couche 6 de poudre, de même nature que celle constitutive de l'objet O, un support 12. En variante, la poudre utilisée est différente de la poudre constitutive de l'objet O.

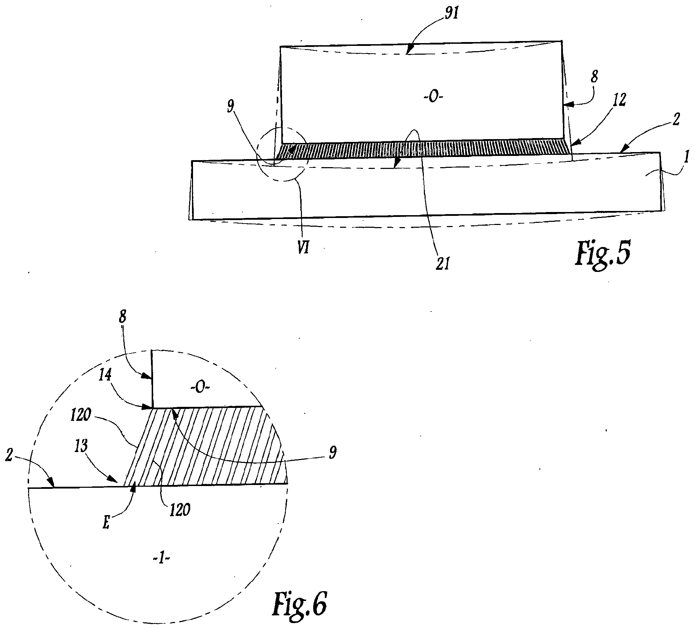

De manière avantageuse, comme représenté aux figures 5 à 8, le support 12 est formé de plusieurs lamelles 120, plates, réparties sur une surface équivalente à celle de la base de l'objet à fabriquer. Chaque lamelle 120 a une longueur minimale correspondant à la largeur de la paroi de l'objet à réaliser, sur une hauteur de 2 mm à 10 mm pour une épaisseur de 0,1 mm à 0,5 mm. La longueur maximale de chaque lamelle 120 est d'environ 30 mm. Afin d'optimiser l'absorption des déformations pour des largeurs de l'objet O supérieures à 30 mm, on dispose plusieurs lamelles 120 l'une derrière l'autre, espacées d'environ 0,5 mm, en prenant soin que ces lamelles 120 aient la même longueur. Par exemple, pour une largeur de l'objet O de 31 mm, on réalise deux lamelles 120 de 15,25 mm de long espacées de 0,5 mm.

Ces lamelles 120 sont régulièrement espacées et parallèles entre elles en absence de déformation. L'espace E entre deux lamelles 120 voisines est comprise entre 0,1 mm à 1 mm. Cet espace E est adapté à la géométrie de l'objet O à réaliser. Chaque lamelle 120 est fixée par une extrémité 13 au plateau 1 et par une autre extrémité 14 à l'objet O.

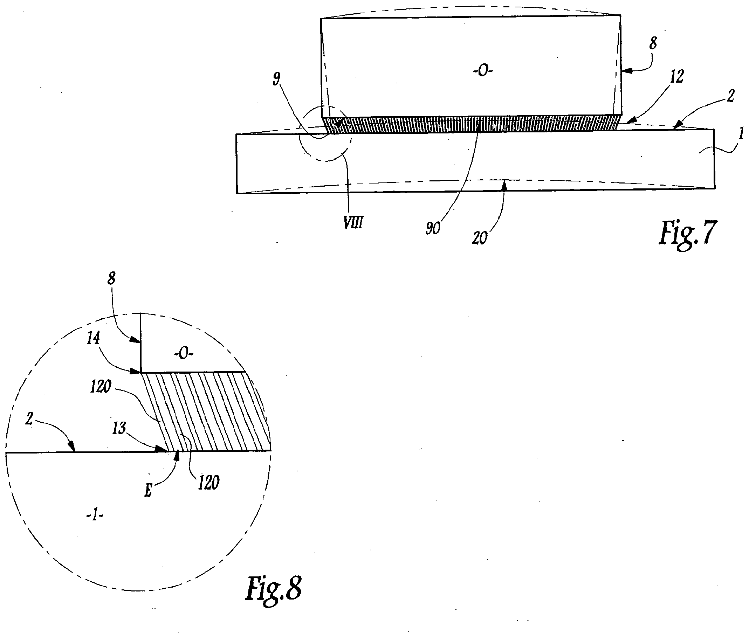

Comme illustré aux figures 5 et 7, les lamelles 120 sont identiques et occupent l'ensemble de la surface disponible de la face 9 de l'objet O destinée à être en regard de la face 2 complémentaire du plateau 1. En variante non illustrée (ne faisant pas partie de l'invention), ces lamelles 120 ne sont disposées que sur une partie de ces faces 2, 9, en l'espèce au niveau des zones correspondant aux côtés finis de l'objet.

Dans un mode de réalisation non illustré, les lamelles ne sont pas identiques, leur forme et/ou leur dimension variant selon la place qu'elles occupent.

Le choix retenu pour la densité et la position des lamelles 120 dépend des déformations attendues et/ou des dimensions de l'objet final.

L'utilisation de lamelles 120, pour faire un support 12, permet, d'une part, d'évacuer à la manière d'un radiateur une partie de l'énergie thermique apportée par le faisceau laser 4, grâce à l'espace E entre deux lamelles 120 voisines et, d'autre part, de créer une liaison suffisamment souple entre le plateau 1 et l'objet O pour se déformer et absorber les déformations, de manière amplifiée par rapport aux déformations subies par l'objet et le plateau. En d'autres termes, les lamelles 120 se déforment plus rapidement et avec une plus grande amplitude que l'objet O et le plateau 1. Ainsi elles absorbent l'essentiel des déformations, ce qui permet de conserver au mieux les caractéristiques dimensionnelles nominales de l'objet O et du plateau 1.

Une telle liaison souple entre l'objet O et le plateau 1, du fait des dimensions de chaque extrémité 13, 14 des lamelles 120, est suffisamment fragile pour permettre, lorsque l'objet O est fini, une séparation aisée entre les lamelles 120, l'objet O et le plateau 1 par des techniques connues en soi, par exemple par un cisaillement avec un outil tranchant. En d'autres termes, les lamelles 120 sont aisées à détruire lorsque l'objet est réalisé et que l'on souhaite le séparer du plateau, cela en limitant toute reprise d'usinage de l'objet O.

La figure 5 illustre un premier type de déformation avec les concavités 21, 91 des faces 2, 9 illustrées en traits fantômes orientées vers le haut, lorsque les lamelles 120 ont absorbé la déformation. Dans ce cas, les lamelles 120, au moins celles proches de la périphérie de l'organe d'absorption 12, sont inclinées en direction de l'objet O. Comme cela apparaît à la figure 5, cette inclinaison est variable, elle est généralement plus importante en périphérie, au voisinage des côtés de l'objet O, qu'au centre de l'organe d'absorption 12. Les lamelles 120 situées en position centrale restent sensiblement perpendiculaires à la face 2 du plateau 1 lors de l'absorption de la déformation.

Les figures 7 et 8 illustrent un second type de déformation avec les concavités 20, 90 des faces 2, 9 orientées dans l'autre sens par rapport aux figures 5, 6, c'est-à-dire situées vers le bas en regardant la figure 7. Comme précédemment, les concavités 20, 90 sont représentées en traits fantômes. Les lames 120 ont alors tendance à être orientées vers l'extérieur de l'organe d'absorption 12. Les lamelles 120 les plus inclinées sont situées en périphérie, au voisinage des côtés de l'objet O. Les lamelles situées en position centrale restent également, lors de l'absorption de la déformation, sensiblement perpendiculaires à la face 2 du plateau 1.

Un tel organe d'absorption peut également être positionné entre au moins deux zones d'au moins un objet, c'est-à-dire que l'on peut inclure une étape de réalisation d'un support déformable, non seulement comme décrit, entre le plateau 1 et un objet O, mais entre deux zones d'un objet O ou entre deux objets susceptibles de se déformer par exemple, parce qu'ils ne présentent pas les mêmes coefficients de dilatation thermique et/ou parce qu'ils sont réalisés en deux matériaux différents. Dans ce cas, une face de l'objet forme la zone de travail recevant la poudre à compacter et à fritter.

## Revendications

1. Procédé de fabrication d'un objet (O) par solidification de poudre (3) à l'aide d'un faisceau laser (4) comprenant au moins des étapes consistant à :
- a) déposer une première couche (6) de poudre (3) sur une zone de travail formée par un plateau (1),
- b) compacter cette première couche (6),
- c) solidifier à l'aide du faisceau laser (4) une première zone (7) de la couche compactée à l'étape b), cette zone correspondant à une section d'une paroi de fond (9) de l'objet fini (O),
- d) répéter les étapes a) à c) jusqu'à obtention de l'objet (O),
- e) avant l'étape c), réaliser par solidification d'une poudre (3) et à l'aide du faisceau laser (4) un organe d'absorption des déformations (12) disposé entre la zone de travail (1) et une zone destinée à participer à une zone (7) correspondant à une section de la paroi de fond (9) de l'objet fini (O) réalisée à l'étape c),
**caractérisé en ce que** l'organe d'absorption réalisé lors de l'étape e) comprend un support (12) déformable formé de plusieurs lamelles (120) propre à relier une face (2) du plateau (1) à la première zone (7) constitutive d'une face (9) de la paroi de fond de l'objet (O), et **en ce que**
les lamelles (120) occupent l'ensemble de la surface disponible de la face (9) de la paroi de fond de l'objet (O) destinée à être en regard de la face (2) complémentaire du plateau (1).

2. Procédé selon la revendication 1, **caractérisé en ce que** les lamelles (120) sont régulièrement espacées.

3. Procédé selon l'une des revendications 1 ou 2, **caractérisé en ce que** les lamelles (120), avant toute absorption de déformations, sont parallèles.

4. Procédé selon l'une des revendications précédentes, **caractérisé en ce que** la poudre (3) constitutive du support déformable (12) est identique au moins à la première couche (7) de poudre (3) constitutive de l'objet (O).

5. Procédé selon l'une des revendications précédentes, **caractérisé en ce que** la poudre constitutive du support déformable (12) est différente au moins de la première couche de poudre constitutive de l'objet.

## Patentansprüche

1. Verfahren zum Herstellen eines Objekts (O) mittels Verfestigens von Pulver (3) mit Hilfe eines Laserstrahls (4), aufweisend mindestens Schritte, die aus Folgendem bestehen:
a) Aufbringen einer ersten Schicht (6) von Pulver (3) auf einen durch eine Platte (1) ausgebildeten Arbeitsbereich,
b) Verdichten der ersten Schicht (6),
c) Verfestigen eines ersten Bereichs (7) der in Schritt b) verdichteten Schicht mit Hilfe des Laserstrahls (4), wobei der Bereich mit einem Abschnitt einer Bodenwand (9) des fertigen Objekts (O) korrespondiert,
d) Wiederholen der Schritte a) bis c) bis zum Erhalten des Objekts (O),
e) vor dem Schritt c) Herstellen mittels Verfestigens eines Pulvers (3) und mit Hilfe des Laserstrahls (4) eines Elements zur Absorption der Verformungen (12), das zwischen dem Arbeitsbereich (1) und einem Bereich angeordnet ist, der dazu bestimmt ist, Teil eines Bereichs (7) zu sein, der mit einem in Schritt c) hergestellten Abschnitt der Bodenwand (9) des fertigen Objekts (O) korrespondiert, **dadurch gekennzeichnet, dass** das in Schritt e) hergestellte Absorptionselement einen aus mehreren Lamellen (120) gebildeten verformbaren Träger (12) aufweist, der geeignet ist, eine Seite (2) der Platte (1) mit dem ersten Bereich (7) zu verbinden, der eine Seite (9) der Bodenwand des Objekts (O) ausbildet, und dadurch dass die Lamellen (120) die gesamte verfügbare Oberfläche der Fläche (9) der Bodenwand des Objekts (O) einnehmen, die dazu bestimmt ist, der der Platte (1) komplementären Seite (2) gegenüberzuliegen.

2. Verfahren gemäß Anspruch 1, **dadurch gekennzeichnet, dass** die Lamellen (120) in regelmäßigen Abständen vorgesehen sind.

3. Verfahren gemäß einem der Ansprüche 1 oder 2, **dadurch gekennzeichnet, dass** die Lamellen (120) vor jeglicher Absorption von Verformungen parallel sind.

4. Verfahren gemäß einem der vorhergehenden Ansprüche, **dadurch gekennzeichnet, dass** das Pulver (3), das den verformbaren Träger (12) ausbildet, mit mindestens der ersten Schicht (7) von Pulver (3) identisch ist, die das Objekt (O) ausbildet.

5. Verfahren gemäß einem der vorhergehenden Ansprüche, **dadurch gekennzeichnet, dass** das Pulver, das den verformbaren Träger (12) ausbildet, sich zumindest von der ersten Schicht von Pulver unterscheidet, die das Objekt ausbildet.

## Claims

1. Method for manufacturing an object (O) by solidifying powder (3) using a laser beam (4) including at least steps consisting of:
- a) depositing a first layer (6) of powder (3) onto a work area constituted by a plate (1),
- b) compacting said first layer (6),
- c) solidifying a first area (7) of the layer compacted in step b) using a laser beam, said area corresponding to a section of the bottom (9) of the finished object (O),
- d) repeating steps a) to c) until the object (O) is obtained,
- e) before step c), producing, by solidifying a powder (3) using the laser beam (4), a member (12) for absorbing deformations arranged between the work area (1) and an area to be part of an area (7) corresponding to a section of the bottom (9) of the finished object (O) produced in step c), **characterised in that** the absorbing member produced in step e) comprises a deformable substrate (12) consisting of a plurality of strips (120) suitable for connecting a surface (2) of the plate (1) to the first area (7) constituting a surface (9) of the bottom of the object (O) and **in that**
the strips (120) occupy the totality of the available surface of the surface (9) of the bottom wall of the object (O) destined to be opposite the surface (2) complementary to the plate (1).

2. Method according to claim 1, **characterised in that** the strips (120) are spaced at regular intervals.

3. Method according to any of claims 1 or 2, **characterised in that** the strips (120), before any absorption of deformations, are parallel.

4. Method according to any of the above claims, **characterised in that** the powder (3) constituting the deformable substrate (12) is identical at least to the first layer (7) of powder (3) constituting the object (O).

5. Method according to any of the above claims, **characterised in that** the powder constituting the deformable substrate (12) is different at least to the first layer of powder constituting the object.
